Europäisches Patentamt

European Patent Office

Office européen des brevets

(19)

(11) Publication number: **0 273 614 B1**

# EUROPEAN PATENT SPECIFICATION

(12)

(45) Date of publication of patent specification: **27.11.91**   (51) Int. Cl.⁵: **F16K 31/08**

(21) Application number: **87310817.9**

(22) Date of filing: **09.12.87**

(54) **Isolation on/off valve.**

(30) Priority: **10.12.86 US 940037**

(43) Date of publication of application:
**06.07.88 Bulletin 88/27**

(45) Publication of the grant of the patent:
**27.11.91 Bulletin 91/48**

(84) Designated Contracting States:
**BE DE FR NL**

(56) References cited:
**EP-A- 0 183 205**
**WO-A-87/04745**
**DE-A- 3 515 848**
**GB-A- 2 079 412**
**GB-A- 2 119 904**

(73) Proprietor: **Eidsmore, Paul George**
**2 Blue Hill Court**
**Scotts Valley California 95066(US)**

(72) Inventor: **Eidsmore, Paul George**
**2 Blue Hill Court**
**Scotts Valley California 95066(US)**

(74) Representative: **Jones, Colin et al**
**W.P. THOMPSON & CO. Coopers Building**
**Church Street**
**Liverpool L1 3AB(GB)**

## Description

The present invention relates to a valve for controlling the flow of fluid therethrough.

Fluid under pressure is commonly controlled by means of a valve which includes a valve seat and a mating element that can be controllably positioned relative to the valve seat. The position of the mating element relative to the valve seat within the valve is typically controlled from outside the valve with the aid of sliding or rotating seals surrounding some portion of the movable element that protrudes through the valve.

Magnetically-actuated valves of various types for controlling toxic fluids under pressure are known to obviate sliding or rotating seals by relying upon magnetic fields externally applied to control the operation of internal valve parts.

In particular, such a valve is known (EP-A-0183205) comprising a valve body having first and second channels contiguous with respective ports, of which one is a fluid inlet and the other is a fluid outlet a valve member disposed in said first channel and having a seal face co-operable with an aperture, between the first and second channels for providing selective communication between said first and second channels a first magnet in said valve member, a second magnet disposed in said second channel for magnetically acting on said first magnet in one direction and magnet means disposed remotely from said first and second channels for acting said first magnet in the other direction.

WO-87/04745 describes such a valve, in which the first magnet is disposed in a chamber in the valve member and is dimensioned relative to said chamber such that it can move therein between first and second positions corresponding to open and closed positions of said valve member, and in which the second magnet urges said first magnet to one of said first and second positions and said magnet means urges said first magnet to the other of said first and second positions.

GB-A-2079412 illustrates a solenoid valve whose valve element has a domed seal face which cooperates with a frusto-conical valve seat.

GB-A-2119904 illustrates a miniature implantable magnetically actuable valve whose valve member is floatingly supported in a valve body by multi-spiral leaf springs.

In accordance with the present invention, said seal face has an outwardly extending domed surface adapted for closing engagement with a substantially frusto-conical region surrounding said aperture, and the valve member floatingly received in said first channel and is biassed by springs to a floating position.

Single-acting and double-acting valve elements may be magnetically controlled from a location external to the valve body to provide fluid flow control and fluid system isolation without the potential hazard of sliding or rotating seals between the fluid system and the enviroment. The valve according to the present invention can be designed to permit convenient control of fluids under pressure simply by manipulating the strength and orientation of an external magnetic field acting as said magnet means. Single-acting valve operation may serve as a pressure-enhanced, normally-closed valve which can be magnetically activated to pass fluid in the downstream direction from a fluid supply. Also a double-acting valve according to a perfferred embodiment of the present invention may serve as a pressure-enhanced isolation valve which prevents fluid flow in both directions, for example, under conditions of excess back pressure, until magnetically activated by an external, controlling magnetic field.

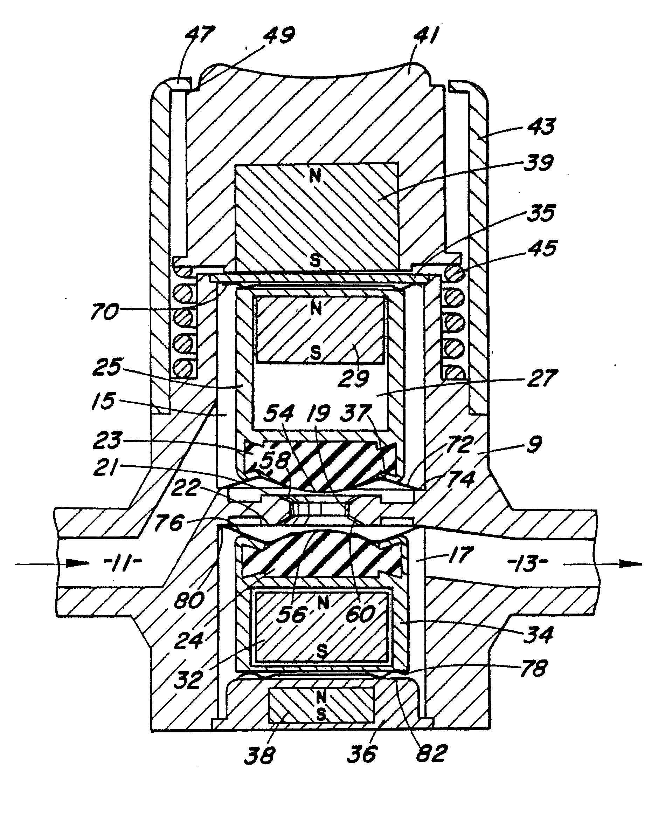

The invention is described futher hereinafter, by the way of example only, with reference to the accompanying drawing which illustrates a cross-sectional view of one embodiment of a valve in accordance with the present invention.

A generally cylindrical valve in metal body 9 includes integral fluid ports 11 and 13. Alternatively, the fluid ports 11 and 13 may be welded to body 9 using electron-beam welding techniques, or the like, to eliminate threads, flanges and other discontinuities and the associated probabilities for leaks. Each of the fluid ports 11 and 13 is coupled to an internal channel 15, 17, respectively, which are coupled to each other through an aperture 19. Fluid flow through the valve is controlled by the spacing or engagement between the sealing surface 21, 22 surrounding aperture 19 and elastomeric valve seals 23, 24 carried on a movable element 25 and a sealing element 34. The element 25 is generally cylindrical and is mounted for sliding movement within the fluid channel 15 in a direction that carries the valve seal 23 into or away from sealing engagement with a sealing surface 21 of the aperture 19. The element 25 includes a sealed internal, elongated cylindrical chamber 27 which contains a generally cylindrically-shaped magnet 29 that is free to slide from one end to the other within chamber 27.

A magnet 32 for attracting the magnet 29 carried in element 25 into sealing engagement is itself encapsulated in the movable sealing element 34 which includes the elastomeric seal 24. Thus, with the magnets 29 and 32 disposed in attractive orientation and carried by their respective sealing elements 25 and 34, the aperture 19 is sealed from both sides by the seal 23 engaging the surrounding upper surface 21 and by the seal 24 engaging the surrounding lower surface 22. These magetically-

enhanced seals are further enhanced by net fluid pressure in channel 15 (which enhances the seal between surfaces 21 and 23) or by net fluid pressure in channel 17 (which enhances the seal between surfaces 22 and 24), thereby assuring complete isolation between the fluid ports and channels that couple to the aperture 19. Another magnet 38 (shown smaller to depict a source of relatively lower-level magnetic flux) is encapsulated within an end cap 36 in magnetically attractive orientation to magnet 32 and the end cap 36 is beam welded to body 9, as discussed previously, to eliminate the formation of joints and the possibility of leakage oocurring. The magnet 38 of lower-level flux is thus incapable of overcoming the attractive force between magnets 29 and 32 that bias the seals closed.

The magnetic attraction between magnets 29 and 39 (when magnet 39 is repositioned, upon actuation of button 41, into close proximity with the end plate 35), repositions the magnet 29 to the upper position within chamber 27 and carries the element 25 and the seal 23 away from engagement with the sealing surface 21. This repositioning of the magnet 29 away from the magnet 32 substantially reduces the attractive force therebetween, and magnet 32 is attracted with greater net force toward magnet 38. Sealing element 34, which carries the magnet 32 and seal 24, is thus slidably repositioned away from sealing engagement between seal 24 and surface 22 to a position of close proximity to the magnet 38.

The valve continues to operate in the open mode, under the control of the magnetic flux produced by the magnet 39. Once the magnet 30 is repositioned remotely from the end plate 35 (or the magnetic flux of an equivalent electromagnet is decreased), the net attractive force between the magnets 29 and 32 is again restored, the magnet 29 is repositioned within the chamber 27 closely adjacent the aperture, and the respective elements 25, 34 and seals 23, 24 are repositioned against both sealing surfaces 21, 22 surrounding the aperture 19. The magnetic force of attraction between the magnets 38 and 32 is reduced and is overcome by the attractive force between magnets 29 and 32 to restore the valve to its normally-closed setting. Thus, fluid flow through this embodiment of the valve of the present invention is further controlled by repositioning movable magnets orientated so as to be mutually attractive, and carried by movable sealing elements disposed on each side of the aperture away from their respective positions of sealing engagement with the surrounding surfaces of the aperture, to other positions within their respective elements away from sealing engagements with the surrounding surfaces of the aperture and closely proximate other respective attracting magnets.

This valve assures a margin of safety against opening under conditions of overpressurization of the fluid supply. The pressure-enhanced seal prohibiting fluid flow, as previously described, and the limited magnetic force that is available internally to actuate the elements 25 and 34 establishes a maximum pressure above which the valve cannot be opened. This is particularly important if the valve is placed in a system upstream of a glass or quartz vessel (as is common in semiconductor manufacturing systems) which may rupture or be damaged by excessive fluid pressure. Thus, in contrast to conventional valves which may be forced open under manual control, or by sufficient air pressure or electromagnetic force applied to the valve, operation of this valve, in overpressure supply conditions remains immune to externally-applied forces that might be imprudently applied to force it open. Pushing down harder upon the button 49 does not apply more force to open the valve than can be provided by the magnetic attraction of magnets 29 and 39. The force available from these magnets can thus only overcome a certain limited supply of fluid pressure acting upon the effective area of the aperture. For a larger aperture and the same magnets 29 and 39, a lower level of supply pressure must be overcome to open the valve.

The seals 23 and 24 are modified to limit lateral shifting of the seals relative to modified sealing surfaces 21, 22. More particularly, each seal 23, 24 includes an outwardly facing spherical button or dome-shaped surface 54,56 respectively. These dome-shaped surfaces 54,56 are preferably received in modified sealing surfaces 21, 22. As shown, the sealing surfaces include frusto-conical recesses 58, 60 closely surrounding the aperture 19. Modification of the seals and sealing surfaces in this manner assures a tight sealing relationship therebetween and limits the effect of horizontal forces that may otherwise tend to dislodge the seal from its associated sealing surface.

Additionally, use of the valve in ultra-clean environments where contaminants must be closely controlled is enhanced by altering the construction of the movable element 25 and the sealing element 34. These elements 25, 34 are reduced in lateral dimension so as to result in the formation of an annular gap between the elements and sidewalls that greatly reduces the chance of minute particles resulting from friction between said elements and sidewalls, from contaminating the fluid.

To maintain the vertical and horizontal alignment of the movable element 25 a pair of opposed biasing means such as springs 70,72 are used. The first or upper spring 70 is interposed between the end plate 35 and the movable element 25. Preferably a portion of the spring 70 is welded into the joint defined by the end plate 35 and valve body 9. Another portion of the spring is spot welded to the element 25. Similarly, the second or lower spring 72 is received on a radially extending shoulder 74 in the channel 15 and spot welded to the movable element 25 along the flange 37. The movable element is thus biased in floating relation in the channel. Contact between the element and end plate is prevented while tight engagement with the sealing surface 21 is maintained when the valve is in a closed position.

The sealing element 34 is, likewise biased at opposed upper and lower ends by springs 76, 78. The spring 76 is similar to spring 72 and spot welded to the element along a flange thereof and engages the radially extending wall 80 of the channel 17. The spring 78 is interposed between the end cap 36 and the face 82 of the sealing element 34. This arrangement also maintains the sealing element 34 in floating relationship within the channel 17 but does not interfere with the sealing contact between the dome-shaped surface 56 and the sealing surface 22.

Therefore, the fluid flow isolation and control apparatus according to the present invention tends to a normally closed setting, which apparatus is reliable and can be controlled externally by magnetic means without need for sliding seals of bellows between internal fluid channels and the environment. The integrity against back flow through the valve is preserved according to the present invention by providing double-acting sealing elements on both sides of an aperture, the lateral movement of which element is opposed when in a sealing location, which elements are under the unified control of a single source of magnetic flux. Also, the risk of contamination of any fluid within the valve, due to abrasive contact between any moving components of the valve, is reduced.

## Claims

1. A valve comprising a valve body (9) having first (15) and second (17) channels contiguous with respective ports, of which one is a fluid inlet (11) and the other is a fluid outlet (13), a valve member (25) in said first channel (15) and having a seal face (54) co-operable with an aperture (19) between the first and second channels (15,17) for providing selective communication between said first (15) and second (17) channels, a first magnet (29) disposed in a chamber (27) defined in said valve member (25) and dimensioned relative to said chamber (27) such that it can move therein between first and second positions corresponding to open and closed positions of said valve member (25), a second magnet (32) disposed in said second channel for magnetically urging said first magnet (29) to one of said first and second positions and magnet means (39) disposed remotely from said first and second channels for urging said first magnet to the other of said first and second positions, characterised in that said seal face has an outwardly extending domed surface (54) adapted for closing engagement with a substantially frusto-conical region (58) surrounding said aperture (19), and in that the valve member (25) is floatingly received in said first channel (15) and is biassed by spring (70, 72) to a floating position.

2. A valve as claimed in claim 1, wherein first and second springs (70, 72) operatively engage opposed ends of said valve member (25).

3. A valve as claimed in claim 1 or 2, further comprising a second valve member (34) disposed in said second channel (17) and having a seal face (56) adapted for selective closing relation with said aperture (19), said second magnet (32) being disposed in said second valve member (34).

4. A valve as claimed in claim 3, wherein said seal face (56) of said second valve member (34) has an outwardly extending domed surface.

5. A valve as claimed in claim 4, further comprising a substantially frusto-conical region (60) adjacent said aperture (19) for receiving said domed surface (56) of said second valve member (34) in the valve-closed position.

6. A valve as claimed in any of claims 3 to 5, further comprising springs (76, 78) for biasing said second valve member (34) into floating relation in said second channel (17).

7. A valve as claimed in claim 6, wherein first and second springs (76, 78) operatively engage opposed ends of said second valve member (34).

8. A valve as claimed in any of claims 3 to 7, further comprising a third magnet (38) urging said second magnet (32) away from the magnetic influence of said first magnet (29).

## Revendications

1. Valve, comprenant un corps de valve (9), présentant des premier (15) et second canaux (17), contigus à des orifices respectifs, dont l'un est une entrée de fluide (11) et l'autre une sortie de fluide (13), un élément de soupape (25), situé dans ledit premier canal (15) et présentant une surface d'étanchéité (54) susceptible de coopérer avec une ouverture (19), entre les premiers et second canaux (15,17), pour assurer une communication sélective entre lesdits premier (15) et second canaux (17), un premier aimant (29), disposé dans une chambre (27) définie dans ledit élément de soupape (25) et dimensionné, par rapport à ladite chambre (27), de façon à pouvoir se déplacer entre des première et seconde positions, correspondant à des positions ouverte et fermée dudit élément de soupape (25), un second aimant (32) étant disposé dans ledit second canal, pour pousser magnétiquement ledit premier aimant (29) vers l'une des première et second positions et un moyen magnétique (39) étant disposé à distance desdits premier et second canaux, pour pousser ledit premier aimant vers l'autre desdites première et seconde positions, caractérisée par le fait que ladite surface d'étanchéité présente une surface en dôme (54) qui s'étend à l'extérieur, adaptée pour produire un contact d'étanchéité de fermeture avec une zone sensiblement tronconique (58) entourant ladite ouverture (19), et par le fait que ledit élément de soupape (25) est logé flottant dans ledit premier canal (15) et rappelé en une position de flottaison, par un ressort (70,72).

2. Valve selon la revendication 1, dans laquelle des premier et second ressorts (70,72) viennent en contact fonctionnel avec les extrémités opposées dudit élément de soupape (25).

3. Valve selon la revendication 1 ou 2, comprenant en outre un second élément de soupape (34), disposé dans ledit second canal (17) et présentant une surface d'étanchéité (56) adaptée pour entrer en relation de fermeture sélective avec l'ouverture (19), ledit second aimant (32) étant disposé dans ledit second élément de soupape (34).

4. Valve selon la revendication 3, dans laquelle ladite surface d'étanchéité (56) dudit second élément de soupape (34) présente une surface en forme de dôme, s'étendant vers l'extérieur.

5. Valve selon la revendication 4, comprenant en outre une zone sensiblement tronconique (60), adjacente à ladite ouverture (19), pour recevoir ladite surface en forme de dôme (56) dudit second élément de soupape (34), dans la position de valve fermée.

6. Valve selon l'une quelconque des revendications 3 à 5, comprenant en outre des ressorts (76,78) pour déplacer ledit second élément de soupape (34) en relation de flottaison dans ledit second canal (17).

7. Valve selon la revendication 6, dans laquelle lesdits premier et second ressorts (76,78) sont en contact fonctionnel avec les extrémités opposées dudit second élément de soupape (34).

8. Valve selon l'une quelconque des revendications 3 à 7, comprenant en outre un troisième aimant (38), écartant ledit second aimant (32) de l'influence magnétique dudit premier aimant (29).

**Patentansprüche**

1. Ventil mit einem Ventilkörper (9) mit einem ersten (15) und zweiten Kanal (17) benachbart zu entsprechenden Öffnungen, von denen eine ein Fluideinlaß (11) und die andere ein Fluidauslaß (13) ist, einem Ventilelement (25) in dem ersten Kanal (15) mit einer Dichtfläche (54), die mit einer Öffnung (19) zwischen dem ersten und zweiten Kanal (15, 17) zur Herstellung einer selektiven Verbindung zwischen dem ersten (15) und dem zweiten Kanal (17) zusammenwirken kann, einem in einer in dem Ventilelement (25) gebildeten Kammer (27) angeordneten ersten Magnet (29), der im Hinblick auf die Kammer (27) derart dimensioniert ist, daß er sich darin zwischen einer ersten und einer zweiten Position bewegen kann, die einer geöffneten bzw. geschlossenen Position des Ventilelements (25) entspricht, einem in dem zweiten Kanal angeordneten zweiten Magnet (32) zur magnetischen Beaufschlagung des ersten Magnets (29) in eine der ersten bzw. zweiten Positionen sowie mit entfernt von dem ersten und zweiten Kanal angeordneten Magnetmitteln (39) zum Beaufschlagen des ersten Magneten in die andere der ersten bzw. zweiten Position, dadurch gekennzeichnet, daß die Dichtfläche eine nach außen verlaufende gewölbte Oberfläche (54) aufweist, die zum Schließeingriff mit einem im wesentlichen kegelstumpfförmigen, die Öffnung (19) umgebenden Abschnitt (58) ausgebildet ist, und daß das Ventilelement (25) schwimmend in dem ersten Kanal (15) aufgenommen ist und durch Federwirkung (70, 72) in eine Schwimmposition beaufschlagt wird.

2. Ventil nach Anspruch 1, bei dem eine erste und zweite Feder (70, 72) an entgegengesetzten Enden des Ventilelements (25) wirksam angreifen.

3. Ventil nach Anspruch 1 oder 2, weiterhin enthaltend ein zweites Ventilelement (34), das in dem zweiten Kanal (17) angeordnet ist und eine Dichtfläche (56) aufweist, die zur selektiven Schließbeziehung mit der Öffnung (19) ausgebildet ist, wobei der zweite Magnet (32) in dem zweiten Ventilelement (34) angeordnet ist.

4. Ventil nach Anspruch 3, bei dem die Dichtfläche (56) des zweiten Ventilelementes (34) eine sich nach außen erstreckende gewölbte Oberfläche aufweist.

5. Ventil nach Anspruch 4, weiterhin enthaltend einen im wesentlichen kegelstumpfförmigen Bereich (60) benachbart zu der Öffnung (19) zur Aufnahme der gewölbten Oberfläche (56) des zweiten Ventilelements (34) in der geschlossenen Position des Ventils.

6. Ventil nach einem der Ansprüche 3 bis 5, weiterhin enthaltend Federn (76, 78) zum Beaufschlagen des zweiten Ventilelements (34) in eine Schwimmstellung in dem zweiten Kanal (17).

7. Ventil nach Anspruch 6, bei dem erste und zweite Federn (76, 78) an gegenüberliegenden Enden des zweiten Ventilelements (34) wirksam angreifen.

8. Ventil nach einem der Ansprüche 3 bis 7, weiterhin enthaltend einen dritten Magnet (38), der den zweiten Magnet (32) von dem magnetischen Einfluß des ersten Magneten (29) weg beaufschlagt.